# FASCICULE DE BREVET EUROPEEN

(11) **EP 1 801 007 B1**
(45) Date de publication et mention de la délivrance du brevet: **10.02.2010**
(21) Numéro de dépôt: 06291962.6
(22) Date de dépôt: 18.12.2006
(51) Int. Cl.: B64C 25/22, B64C 25/24, F16H 25/20, B64C 25/20

(54) **Actionneur télescopique à tige principale et tige auxiliaire, et procédé faisant application**
Teleskopischer Stellantrieb mit einer Haupt- und Hilfsstange sowie Verfahren zur Benutzung des genannten Stellantriebs
Telescopic actuator with a main rod and an auxiliary rod, and method applying said actuator

(30) Priorité: 23.12.2005 FR 0513298; 16.05.2006 FR 0604353
(43) Date de publication de la demande: 27.06.2007
(73) Titulaire: MESSIER-BUGATTI, 78140 Vélizy-Villacoublay (FR)
(72) Inventeur: Bucheton, Daniel, 78150 Le Chesnay (FR); Charuel, Hervé, 91620 Nozay (FR)
(74) Mandataire: Parzy, Benjamin Alain

(56) Documents cités:
- WO-A-83/02141
- WO-A-91/05698
- WO-A-2004/113707
- BE-A- 476 907
- DE-C1- 3 308 537
- GB-A- 2 272 205

## Description

L'invention concerne un actionneur à tige principale et tige auxiliaire, et un procédé faisant application.

### ARRIERE-PLAN DE L'INVENTION

On connaît des actionneurs télescopiques de type vérin comportant un corps dans lequel une tige principale est montée pour coulisser selon un axe de coulissement entre une position rentrée et une position sortie.

De tels actionneurs sont par exemple utilisés pour le déploiement d'atterrisseurs sur un aéronef. Il existe un risque (très faible) que la tige principale se bloque dans le corps, de sorte que non seulement l'actionneur ne peut plus remplir sa fonction, mais en outre, il bloque le mouvement de la chaîne mécanique dans lequel l'actionneur est inséré. En particulier, dans l'application mentionnée, l'atterrisseur serait bloqué et ne pourrait plus être déployé, ce qui peut poser un problème de sécurité.

Dans d'autres domaines, on connaît des actionneurs télescopiques comportant une tige auxiliaire montée pour coulisser dans la tige principale selon le dit axe de coulissement entre une position rentrée et une position sortie. Ces actionneurs permettent une course augmentée.

Un dispositif selon le préambule de la revendication 1 est connu de BE 476907. Le procédé d'utilisation de l'actionneur selon la revendication 1 est revendiqué dans la revendication 17.

### OBJET DE L'INVENTION

L'invention a pour objet un actionneur qui, même en cas de blocage de la tige principale, ne s'oppose pas à la poursuite du mouvement.

### BREVE DESCRIPTION DE L'INVENTION

En vue de la réalisation de ce but, on propose un actionneur télescopique comportant un corps dans lequel une tige principale est montée pour coulisser télescopiquement selon un axe de coulissement entre une position rentrée et une position sortie, l'actionneur télescopique comportant une tige auxiliaire montée pour coulisser dans la tige principale selon le dit axe de coulissement entre une position rentrée et une position sortie. Conformément à l'invention, l'actionneur comporte des moyens commandés de retenue de la tige auxiliaire en position rentrée dans la tige principale.

Ainsi, tant que la tige principale coulisse correctement dans le corps, la tige auxiliaire reste bloquée dans la tige principale et l'actionneur fonctionne comme un actionneur classique. Si la tige principale vient à être bloquée, il suffit alors de commander les moyens de retenue pour qu'ils libèrent la tige auxiliaire, de sorte que l'actionneur est à nouveau libre de s'allonger et qu'il ne bloque plus le mouvement de la chaîne mécanique dans laquelle il est inséré.

Ainsi, contrairement aux vérins télescopiques à tige principale et tige auxiliaire connus, la tige auxiliaire de l'actionneur de l'invention n'est pas utilisée pour augmenter la course de l'actionneur, mais pour fournir une possibilité d'obvier à un éventuel blocage de la tige principale.

### BREVE DESCRIPTION DES DESSINS

L'invention sera mieux comprise à la lumière de la description qui suit en référence aux figures des dessins annexés parmi lesquelles :
- la figure 1 est une vue en coupe schématique d'un actionneur selon un mode particulier de réalisation de l'invention incorporant des moyens commandés de sortie de la tige principale et des moyens de freinage d'un coulissement de la tige auxiliaire dans la tige principale, illustré alors que la tige principale et la tige auxiliaire sont en position rentrée ;
- la figure 2 est une vue analogue à la figure 1 sur laquelle la tige principale est en position sortie alors que la tige auxiliaire est en position rentrée ;
- la figure 3 est une vue analogue à la figure 1 sur laquelle la tige principale est en position rentrée alors que la tige auxiliaire est en position sortie;
- la figure 4 est une vue en coupe partielle de moyens de freinage d'un coulissement de la tige auxiliaire dans la tige principale, selon une variante de réalisation ;
- là figure 5 est une vue en coupe partielle des moyens de freinage selon une autre variante de réalisation ;
- la figure 6 est une vue en coupe partielle de moyens de freinage d'un coulissement de la tige auxiliaire dans la tige principale selon un autre mode de réalisation particulier ;
- la figure 7 est une vue en coupe partielle de moyens de freinage selon une variante de réalisation;
- la figure 8 est une vue en coupe partielle de moyens de freinage d'un coulissement de la tige auxiliaire dans la tige principale selon encore un autre mode de réalisation;
- la figure 9 est une vue en coupe partielle de moyens de freinage selon une variante de réalisation.

### DESCRIPTION DETAILLEE DE L'INVENTION

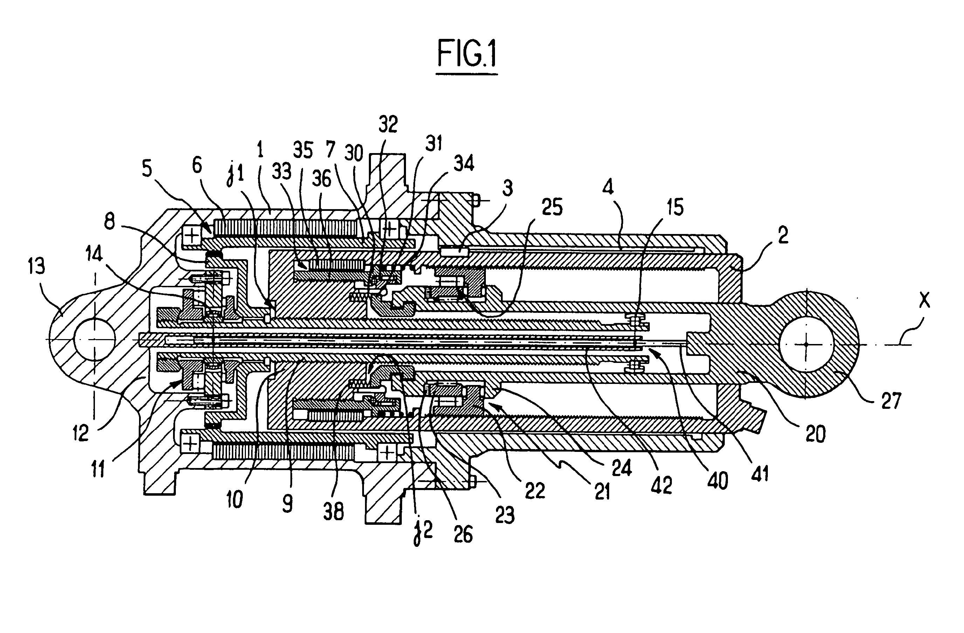

En référence à la figure 1, et conformément à un mode particulier de réalisation de l'invention, l'actionneur comporte un corps 1 définissant une cavité cylindrique fermée par un fond 12 qui porte une chape 13. Une tige principale 2 est montée dans la cavité pour coulisser selon un axe de coulissement X et saillir plus ou moins du corps 1 par une extrémité ouverte de la cavité formant palier.

L'actionneur comporte des moyens commandés de coulissement de la tige principale 2 par rapport au corps 1. Ces moyens de coulissement comportent :
- une clavette 3 solidaire de la tige principale 2 qui coopère avec une rainure 4 ménagée dans la paroi de la cavité du corps 1 pour empêcher la tige principale 2 de tourner relativement au corps 1 ;
- un moteur de manoeuvre 5 électrique comportant un stator 6 monté fixe sur le corps 1 et un rotor 7 monté tournant sur le corps 1 selon l'axe X ;
- une vis mère 9 qui s'étend selon l'axe X et qui est montée tournante sur le corps 1 selon l'axe X en étant entraînée en rotation par le rotor 7 par l'intermédiaire d'un coupleur 8. La vis mère 9 est retenue axialement sur le corps 1 au moyen d'une butée axiale à double effet 11 ;
- un écrou 10 homologue réalisé dans un fond de la tige principale traversé par la vis mère 9 pour constituer entre la vis mère 9 et la tige principale 2 une liaison hélicoïdale réversible.

Ainsi, une rotation du rotor 7 entraîne une rotation de la vis mère 9 qui entraîne un déplacement axial de la tige principale 2.

La tige principale 2 est creuse et définit une cavité dans laquelle une tige auxiliaire 20 est montée pour coulisser dans la tige principale 2 selon l'axe X et saillir d'une extrémité ouverte de celle-ci formant palier.

L'actionneur comporte des moyens de freinage d'un coulissement de la tige auxiliaire 20 dans la tige principale 2 dans le sens d'une extension de la tige auxiliaire 20. Ces moyens de freinage, qui forment également un palier 21 de guidage de la tige auxiliaire 20 dans la tige principale 2, comprennent :
- un entraîneur 22 qui est fileté extérieurement et qui coopère avec un taraudage intérieur de la tige principale 2 pour constituer entre l'entraîneur 22 et la tige principale 2 une liaison hélicoïdale réversible ;
- une virole 23 qui est montée en rotation sur la tige auxiliaire 20 au moyen de rouleaux, l'entraîneur 22 étant lui-même monté en rotation sur la virole 23 au moyen de rouleaux, l'entraîneur 22 étant axialement prisonnier entre d'une part des rouleaux s'appuyant sur une butée 24 de la tige auxiliaire 20 et d'autre part la virole 23 ;
- une roue libre à cliquets 25 entre l'entraîneur 22 et la virole 23 qui, lorsque la tige auxiliaire 20 sort de la tige principale 2 et que l'entraîneur 22 tourne du fait de sa liaison hélicoïdale avec la tige principale 2, provoque la rotation de la virole 23. Par contre, lorsque la tige auxiliaire 20 rentre dans la tige principale 2, l'entraîneur 22 tourne mais n'entraîne pas la virole 23 en rotation ;
- une rondelle de frottement 26 portée par la tige auxiliaire 20 en regard d'une face libre de la virole 23 et adaptée à générer un frottement sur la virole 23 lorsque celle-ci tourne en étant appuyée contre la rondelle de frottement 26 sous l'effet de l'effort extérieur qui tire sur la tige auxiliaire 20.

On notera que la tige auxiliaire 20 est guidée axialement d'une part par l'extrémité ouverte de la tige principale 2 et d'autre part par le palier 21. La tige principale 2 est guidée axialement d'une part par l'extrémité ouverte du corps 1 et d'autre part par la coopération de l'écrou 10 avec la vis mère 9. Enfin, la vis mère 9 est guidée axialement à une extrémité par une liaison rotulée 14 insérée dans la butée à double effet 11, et à l'autre extrémité par un palier glissant rotulé 15 qui est monté pour coulisser à l'intérieur de la tige auxiliaire 20. Grâce à ces dispositions, il est inutile d'équiper la tige principale 2 d'un palier glissant à l'intérieur du corps 1.

On remarquera que la tige auxiliaire n'est pas arrêtée en rotation par rapport à la tige principale 2. Ceci est inutile si la chape d'extrémité 27 de la tige auxiliaire 20 et la chape 13 du corps 1 sont tous deux attelées à des éléments externes qui ne sont pas rotatifs entre eux, ou à faible rotation. Ce sont alors les éléments externes qui assurent l'anti-rotation de la tige auxiliaire 20 par rapport à la tige principale 2 et au corps 1. En variante, il est loisible de prévoir une anti-rotation interne entre la tige auxiliaire 20 et la tige principale 2.

L'actionneur comporte enfin, selon un aspect essentiel de l'invention, des moyens commandés de retenue de la tige auxiliaire 20 en position rentrée dans la tige principale 2. Ces moyens de retenue comportent :
- une griffe 30 s'étendant intérieurement à la tige principale 2 ;
- un redan 31 monté en extrémité de la tige auxiliaire 20 et adapté à coopérer avec la griffe 30 ;
- un manchon de verrouillage 32 déplaçable axialement par un moteur de déverrouillage 33 à l'encontre d'un ressort de rappel 34 depuis une position de verrouillage (illustrée ici) dans laquelle il coiffe la griffe 30 pour l'empêcher de s'expanser radialement et une position de libération dans laquelle il laisse la griffe 30 libre de s'expanser radialement au passage du redan 31.

A cet effet, le moteur de déverrouillage 33 comporte un stator 35 fixé sur la tige principale 2 et un rotor 36 qui coopère avec un filetage homologue de la tige principale 2 pour constituer une liaison hélicoïdale réversible. La rotation du rotor 36 provoque donc son déplacement axial. Le manchon de verrouillage 32 est porté en extrémité du rotor 36 en étant monté à rotation sur ce dernier au moyen de rouleaux.

Le fonctionnement de l'actionneur est maintenant décrit dans l'application particulière du déploiement d'un atterrisseur d'aéronef. On supposera ici que la chape 13 du corps 1 est accrochée à la structure de l'aéronef, tandis que la chape 27 de la tige auxiliaire 20 est attelée au caisson d'un atterrisseur articulé sur l'aéronef et mobile entre une position rétractée et une position déployée.

La situation illustrée à la figure 1 sur laquelle la tige principale 2 est en position rentrée dans le corps 1 et la tige auxiliaire 20 est en position rentrée dans la tige principale 2 en étant retenue dans cette position correspond à la situation dans laquelle l'actionneur de l'invention se trouve lorsque l'atterrisseur est en position rétractée dans sa soute.

Pour faire sortir l'atterrisseur, et selon un mode de fonctionnement normal de l'actionneur, on commande tout d'abord le moteur de manoeuvre 5 pour faire reculer la tige principale 2 dans le corps 1. A cet effet, un jeu j1 est prévu en position rentrée entre l'extrémité de la tige principale 2 et le coupleur 8 de sorte que la tige principale peut être légèrement reculée au delà de la position rentrée.

Ce recul permet de soulager le boîtier d'accrochage qui retient l'atterrisseur en position rétractée, ce qui facilite la manoeuvre du crochet du boîtier d'accrochage.

Une fois le crochet manoeuvré et l'atterrisseur libéré, on coupe l'alimentation électrique du moteur de manoeuvre 5 de sorte que l'atterrisseur descend sous l'effet de son propre poids, forçant la tige principale 2 à sortir. Ce mouvement est possible du fait de la réversibilité de la liaison hélicoïdale entre l'écrou 10 et la vis mère 9. En variante, on ne coupe pas l'alimentation du moteur de manoeuvre 5, mais on l'abaisse suffisamment pour que le poids de l'atterrisseur puisse entraîner la tige principale 2 à l'encontre d'une résistance opposée par le moteur de manoeuvre 5. Cette résistance permet de contrôler activement la vitesse de déploiement de l'atterrisseur.

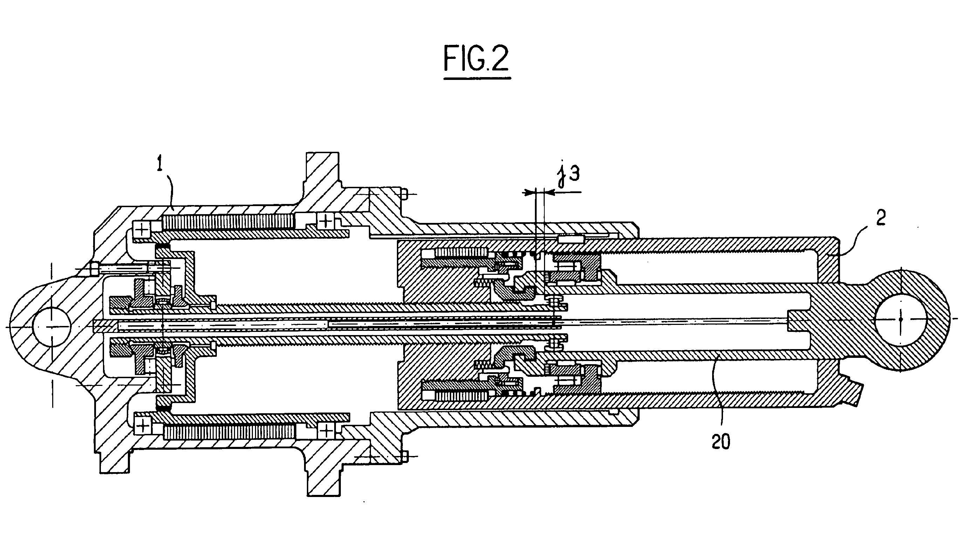

L'atterrisseur arrive alors vers sa position déployée, pour laquelle la tige principale 2 est dans la position sortie telle qu'illustrée à la figure 2.

On notera qu'un tel atterrisseur est souvent stabilisé en position déployée par une contrefiche à deux bras articulés. Il est courant de faire en sorte que l'alignement des bras de la contrefiche ne coïncide pas avec la position déployée de l'atterrisseur, mais avec une position extrémale légèrement au delà de la position déployée, de sorte que la position de la contrefiche dans laquelle elle est verrouillée pour stabiliser l'atterrisseur soit une position au delà de la position d'alignement.

Cette disposition revient à imposer à l'atterrisseur un déplacement depuis la position rétractée jusqu'à la position extrémale dans laquelle les bras de la contrefiche sont alignés, puis un très léger retour de la position extrémale à la position déployée, la contrefiche atteignant alors sa position de verrouillage au delà de la position alignée.

La position sortie de l'actionneur illustrée à la figure 2 correspond à la position déployée de l'atterrisseur et ne correspond donc pas la position de sortie maximale de la tige (qui elle correspond à la position extrémale de l'atterrisseur). On voit sur cette figure qu'il existe un jeu j3 entre la partie de la tige auxiliaire 20 portant le redan 31 et le palier rotulé 15 de la vis mère 9 permettant d'accommoder la position de sortie maximale.

Si, pour une raison quelconque, la tige principale 2 se bloque lors de la manoeuvre de l'atterrisseur dans une position de sortie maximale correspondant à la position extrémale de l'atterrisseur, l'actionneur s'oppose alors au retour de l'atterrisseur de la position extrémale vers la position déployée, ce qui empêche la contrefiche d'être verrouillée et pose donc un problème de sécurité.

Afin de permettre le verrouillage de la contrefiche, même si la tige principale 2 est bloquée dans la position de sortie maximale, des ressorts 38 sont disposés sur la tige principale 2 pour rappeler le redan 31 de la tige auxiliaire 20 en butée contre les dents d'extrémité des bras de la griffe 30, définissant ainsi la position rentrée de la tige auxiliaire 20 dans la tige principale 2. Cependant, les ressorts 38 laissent la possibilité d'un léger recul (symbolisé par le jeu j2) de la tige auxiliaire 20 dans la tige principale 2 à l'encontre des ressorts 38. Cette possibilité de recul permet le petit mouvement de retour de l'atterrisseur de la position extrémale à la position déployée, ce qui permet le verrouillage de la contrefiche.

Pour faire revenir la tige principale 2 en position rentrée, il suffit de faire tourner le moteur de manoeuvre 5 dans l'autre sens pour faire rentrer la tige principale 2 vers la position rentrée illustrée à la figure 1.

Si pour une raison quelconque, la tige principale 2 reste bloquée en position rentrée ou dans une position intermédiaire, empêchant ainsi le déploiement de l'atterrisseur, il suffit d'alimenter le moteur de déverrouillage 33 pour placer le manchon de verrouillage 32 en position de libération. Sous l'effet du poids de l'atterrisseur alors que celui-ci est libéré par le crochet du boîtier d'accrochage, la tige auxiliaire 20 est tirée et le redan 31 force la griffe 30 à s'expanser radialement pour laisser passer le redan 31 de sorte que la tige auxiliaire n'est plus retenue et peut coulisser. On obvie ainsi au blocage de la tige principale en permettant à nouveau à l'actionneur de s'allonger, ce qui évite tout blocage de l'atterrisseur dans une position qui n'est pas la position déployée et verrouillée.

La sortie de la tige auxiliaire 20 force l'entraîneur 22 à tourner et celui-ci entraîne en rotation la virole 23, qui, plaquée contre la bague de frottement 26 par le poids de l'atterrisseur, est freinée dans sa rotation. Ce freinage induit un freinage de la rotation du guide 22, et donc un freinage de la sortie de la tige auxiliaire 20. Ce freinage permet de contrôler passivement la vitesse de déploiement de l'atterrisseur.

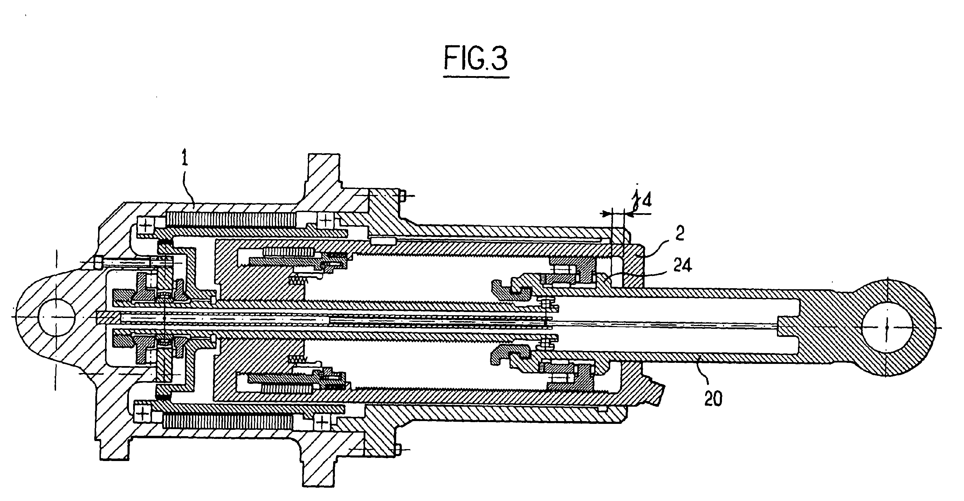

La tige auxiliaire 20 s'étend jusqu'à la position sortie illustrée à la figure 3. De la même façon que précédemment, cette position sortie correspond à la position déployée de l'atterrisseur, mais n'est pas une position de sortie maximale de la tige auxiliaire. A cet effet, on voit sur cette figure qu'il existe un jeu j4 entre la butée 24 et le fond de la tige principale 2 permettant d'accommoder la position de sortie maximale.

Ainsi, ce mode de déploiement secours permet de pallier les effets d'une panne du moteur de manoeuvre 5 ou d'un blocage de la tige principale 2.

A titre de test, il peut être intéressant de procéder de temps en temps à un déploiement de l'atterrisseur selon le mode de déploiement secours, même lorsque la tige principale 2 n'est pas bloquée. A cet effet, on alimente le moteur de déverrouillage 33 pour libérer la tige auxiliaire 20. L'atterrisseur descend sous son propre poids en entraînant la tige auxiliaire jusqu'à sa position sortie comme lors du mode de déploiement secours. Il convient de bloquer axialement la tige principale 2 en alimentant le moteur de manoeuvre 5 de sorte que la tige principale ne sorte pas en étant entraînée par frottement par la tige auxiliaire 20. Puis on alimente le moteur de manoeuvre 5 pour faire sortir la tige principale 2 jusqu'à ce qu'elle soit dans la position illustrée à la figure 2, ou légèrement plus avancée comme permis par les ressorts 38. Dans cette position, le redan 31 est de nouveau engagé sous la griffe 30. Il suffit alors de couper l'alimentation du moteur de déverrouillage 33 de sorte que le manchon 32 revienne sous l'effet du ressort 34 en position de verrouillage dans laquelle il coiffe la griffe. La tige auxiliaire 20 est de nouveau attelée à la tige principale 2 de sorte que l'ensemble peut être rétracté par le moyen du moteur de manoeuvre 5.

Selon un aspect particulier de l'invention, l'actionneur est équipé d'un capteur de position axiale 40 de la tige auxiliaire 20 par rapport au corps 1. Le capteur de position axiale 40 comporte un noyau 41 s'étendant selon l'axe X et fixé à la tige auxiliaire 20, le noyau pénétrant dans un cylindre 42. Le capteur est de préférence de type à induction ou LVDT.

Que l'actionneur soit utilisé en mode normal ou en mode secours, le capteur 40 permet de connaître à tout instant la position de la tige auxiliaire 20 par rapport au corps 1. Pour connaître la position de la tige principale 2 par rapport au corps 1, il suffit de compter le nombre de tours effectués par le moteur de manoeuvre 5.

L'invention n'est pas limitée à ce qui vient d'être décrit, mais bien au contraire englobe toute variante entrant dans le cadre défini par les revendications.

En particulier, bien que l'on ait indiqué que la liaison hélicoïdale entre la vis mère 9 et l'écrou 10 de la tige principale 2 est réversible, cette liaison pourra être irréversible, ce qui impose d'alimenter le moteur de manoeuvre 5 pour faire sortir la tige principale 2. De même, bien que l'on ait indiqué que la liaison hélicoïdale entre le rotor 36 et la tige principale 2 est réversible, cette liaison pourra être irréversible, ce qui impose d'alimenter le moteur de déverrouillage 33 pour faire revenir le manchon en position de verrouillage.

Bien que le moteur de manoeuvre 5 entraîne directement la vis mère 9 par l'intermédiaire du coupleur 8, un réducteur pourra être interposé entre le moteur de manoeuvre et la vis mère.

Bien que l'on ait indiqué que les moyens de coulissement de la tige principale dans le corps et les moyens de retenue de la tige auxiliaire dans la tige principale sont électriques, ces moyens pourront être d'un autre type, par exemple hydraulique.

Bien que les moyens commandés de retenue illustrés mettent en oeuvre un système à griffe et redan, les moyens commandés de retenue pourront être d'un autre type, par exemple à segment ou doigt de verrouillage.

En outre, on pourra prévoir des moyens commandés de coulissement de la tige auxiliaire dans la tige principale.

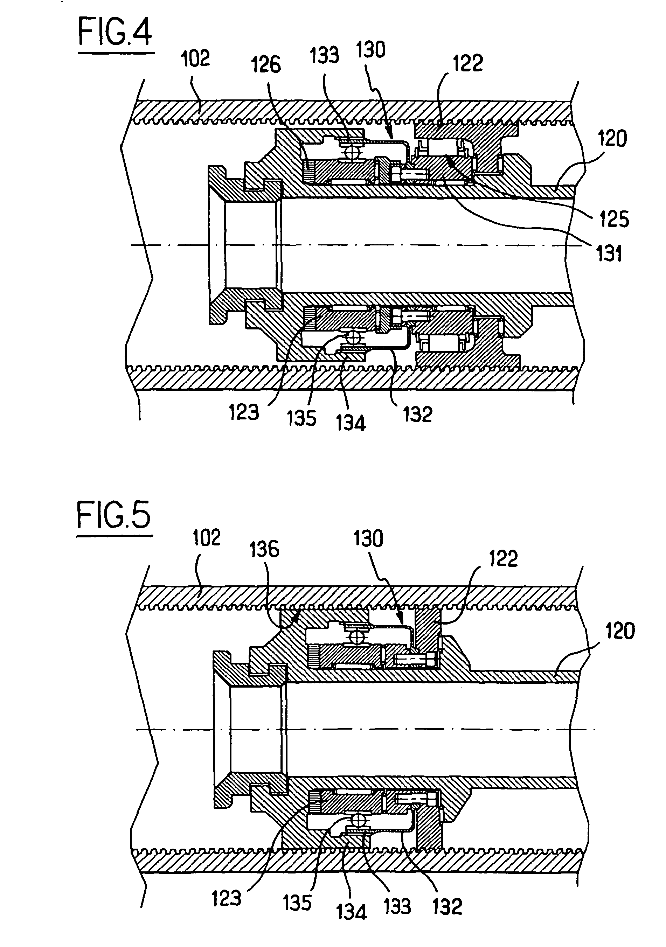

Enfin, le freinage de la tige auxiliaire 20 par rapport à la tige principale 2 peuvent faire l'objet de plusieurs variantes, comme celles illustrées aux figures 4 et suivantes.

Dans une première variante illustrée à la figure 4, sur laquelle les références des éléments communs avec les figures précédentes ont été augmentées d'une centaine, la virole 123 n'est plus entraînée directement par l'entraîneur 122, mais via un multiplicateur 130. Ici, le multiplicateur est un réducteur réversible du type de celui illustré dans le document US-A-2 906 143, mais utilisé à l'envers, c'est-à-dire comme multiplicateur et non comme réducteur.

Le multiplicateur 130 comporte un bague d'entrée 131 qui est guidée en rotation sur la tige auxiliaire 120 et qui est entraînée en rotation par l'entraîneur 122 par l'intermédiaire d'une roue libre 125. L'organe d'entrée 131 est fixé à une cloche 132 qui comporte une paroi circulaire déformable 133 portant sur sa face externe des dents qui coopèrent avec des dents en regard d'une couronne dentée 134, en nombre légèrement plus important. La couronne dentée 134 est solidaire de la tige auxiliaire 120 et donc fixe en rotation.

La coopération des dents de la cloche 132 et des dents de la couronne 134 est assurée par déformation de la paroi circulaire déformable 133 provoquée par des billes reçues dans un chemin de billes de section elliptique formé dans la virole 123, forçant la coopération des dents en deux portions diamétralement opposées. La virole 123 forme ainsi l'organe de sortie du multiplicateur 130. Le multiplicateur est bien connu en soi et ne forme pas l'objet de l'invention en tant que tel. Il est à noter qu'un tel multiplicateur permet, avec un agencement très compact et léger, d'obtenir des rapports de multiplication élevés, de l'ordre de la centaine.

Ainsi, lorsque la tige auxiliaire 120 est entraînée pour sortir de la tige principale 102, l'entraîneur 122 entraîne en rotation l'organe d'entrée 131, qui entraîne la cloche 132, ce qui provoque la rotation de la virole 123 à une vitesse de rotation beaucoup plus importante que la vitesse de rotation de l'entraîneur 122. La virole 123 est axialement forcée contre la rondelle de frottement 126 frotte donc sur celle-ci, ce qui contribue à ralentir le mouvement de sortie de la tige auxiliaire 120.

Par contre, lorsque la tige auxiliaire 120 est forcée à rentrer dans la tige principale 102, la roue libre 125 empêche que le mouvement de rotation de l'entraîneur 122 soit transmis au multiplicateur 130 et donc à la virole 123, de sorte que celle-ci n'exerce aucune résistance à l'entrée de la tige auxiliaire 120.

Le multiplicateur 130 permet de faire tourner la virole 123 beaucoup plus vite que dans le mode de réalisation illustré aux figures 1 à 3, ce qui permet d'obtenir un même effort résistant à l'avancement en diminuant le couple de frottement entre la virole 123 et la rondelle de frottement 126.

A la figure 5 est illustrée une variante très similaire à là précédente, à deux différences près. La première différence réside dans la suppression de la roue libre 125 et de l'organe d'entrée 131, de sorte que la cloche 132 est directement fixée sur l'entraîneur 122. Ainsi, on accepte que, lors de la rentrée de la tige auxiliaire 120 dans la tige principale 102, un effort résistant s'oppose au mouvement de la tige auxiliaire 120. Cependant, on observera que l'effort résistant dans le sens de la rentrée est normalement moins fort que l'effort résistant dans le sens de la sortie, puisque, pour la rentrée, la virole 123 n'est pas poussée vers la rondelle de frottement 126.

La seconde différence réside dans le fait que l'entraîneur 122 ne forme plus un palier de guidage de la tige auxiliaire 120. La fonction de palier est maintenant assurée par une portée 136 réalisée sur une extrémité de la tige auxiliaire 120 pour être en appui contre les sommets des filets du taraudage interne de la tige auxiliaire 120. Ainsi, l'entraîneur 122 est réduit à sa fonction d'entraînement en rotation du mécanisme de génération d'effort résistant.

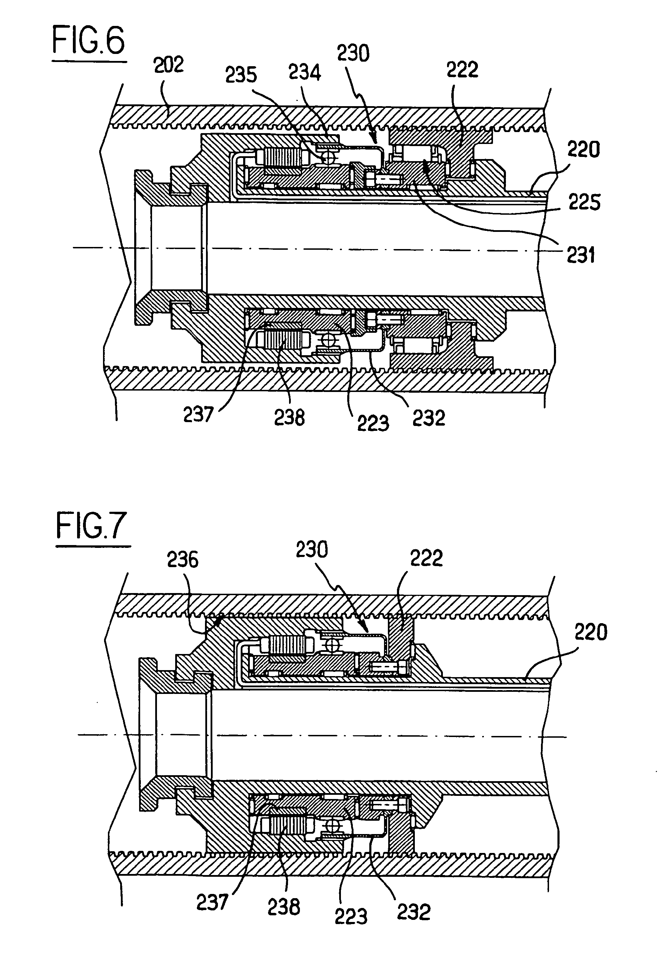

Une autre variante est illustrée à la figure 6 sur laquelle les références des éléments communs avec ceux illustrés aux figures 4 et 5 ont été augmentées d'une centaine. On reconnaît l'entraîneur 222, le réducteur 230 avec son organe d'entrée 231 lié en rotation avec l'entraîneur par l'intermédiaire d'une roue libre 225, sa cloche 232, et sa couronne dentée fixe 234. Quant à la virole 223 qui forme l'organe de sortie du multiplicateur, elle ne frotte plus sur une rondelle de frottement mais porte des aimants permanents 237 disposés circonférentiellement en regard d'un bobinage 238 monté fixe sur la tige auxiliaire 220.

Ainsi, lorsque la virole 223 est entraînée en rotation à grande vitesse lors de la sortie de la tige auxiliaire 220, les aimants permanents 237 qui tournent génèrent dans le bobinage 238 un courant induit qu'il suffit de diriger vers une résistance électrique (non illustrée) pour générer sur la virole 223 un effort électromagnétique résistant freinant sa rotation. La sortie de la tige auxiliaire 220 est donc freinée de façon électromagnétique. Cet effort de freinage peut être contrôlé de façon électronique en faisant varier électroniquement la valeur de, la résistance dans laquelle le bobinage 238 débite le courant induit. En particulier, on peut facilement générer un effort résistant dépendant de la vitesse de sortie de la tige auxiliaire 220.

A la figure 7 est illustrée une variante très similaire à celle illustrée à la figure 6, à deux différences près. La première différence réside dans la suppression de la roue libre 225 et de l'organe d'entrée 231, de sorte que la cloche 232 est fixée directement à l'entraîneur 222. Bien que la roue libre soit supprimée, de sorte que la virole 223 tourne aussi bien à la sortie de la tige auxiliaire qu'à sa rentrée, un effort résistant n'est pas nécessairement généré lors de la rentrée de la tige auxiliaire. En effet, il suffit d'ouvrir le circuit dans lequel le bobinage 238 débite pour supprimer tout effort électromagnétique résistant. Au contraire, on peut même, en injectant un courant d'alimentation dans le bobinage 238, créer un effort électromagnétique moteur qui aide à la rentrée de la tige auxiliaire 220. Ainsi, le même organe peut servir à la fois de frein pour la sortie de la tige auxiliaire 220, et de moteur pour sa rentrée.

La seconde différence réside dans le fait que l'entraîneur 222 ne forme plus un palier de guidage de la tige auxiliaire 220. La fonction de palier est maintenant assurée par une portée 236 réalisée sur une extrémité de la tige auxiliaire 220 pour être en appui contre les sommets des filets du taraudage interne de la tige auxiliaire 220. Ainsi, l'entraîneur 222 est ici utilisé uniquement pour sa fonction d'entraînement en rotation du mécanisme de génération d'effort résistant.

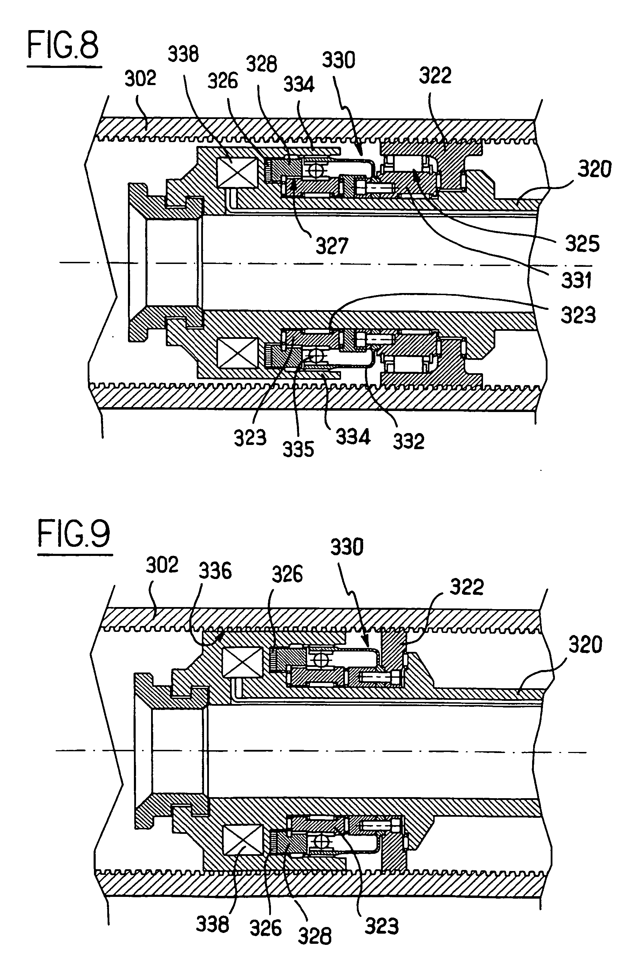

Une autre variante est illustrée à la figure 8 sur laquelle les références des éléments communs avec ceux illustrés aux figures 6 et 7 ont été augmentées d'une centaine. On reconnaît l'entraîneur 322, le réducteur 330 avec son organe d'entrée 331 lié en rotation avec l'entraîneur par l'intermédiaire d'une roue libre 325, sa cloche 332, et sa couronne dentée fixe 334. Quant à la virole 323 qui forme l'organe de sortie du multiplicateur, elle comporte à son extrémité des cannelures 327 coopérant avec des cannelures homologues d'un mors 328 se présentant sous la forme d'un manchon en matériau ferromagnétique. Le mors 328 est déplaçable axialement sous l'effet d'un électroaimant 338 monté fixe sur la tige auxiliaire 320 pour venir pincer une rondelle de frein 326 montée fixe sur la tige auxiliaire 320.

Ainsi, lorsque la virole 323 est entraînée en rotation à grande vitesse lors de la sortie de la tige auxiliaire 320, le mors 328 est lui-même entraîné en rotation à la même vitesse. Il suffit d'alimenter électriquement l'électroaimant 338 pour attirer le mors 328 contre la rondelle de frottement 326 de sorte que le mors 328 frotte contre la rondelle de frottement 326 et qu'un effort résistant soit généré. Cet effort de freinage peut être contrôlé de façon électronique en faisant varier électroniquement le courant d'alimentation de l'électroaimant 338 de sorte que le mors 328 soit attiré avec plus ou moins d'intensité contre la rondelle de frottement 326. En particulier, on peut facilement générer un effort résistant dépendant de la vitesse de sortie de la tige auxiliaire 320.

Lorsque la tige auxiliaire 320 rentre dans la tige principale 302, la roue libre empêche toute rotation de la virole 323, et donc du mors 328, ce qui supprime le frottement entre le mors 328 et la rondelle de frottement 326, même si l'électroaimant 338 reste alimenté.

A la figure 9 est illustrée une variante très similaire à celle illustrée à la figure 8, à deux différences près. La première différence réside dans la suppression de la roue libre 325 et de l'organe d'entrée 331, de sorte que la cloche 332 est fixée directement à l'entraîneur 322. Bien que la roue libre soit supprimée, de sorte que la virole 323 tourne aussi bien à la sortie de la tige auxiliaire qu'à sa rentrée, un effort résistant n'est pas nécessairement généré lors de la rentrée de la tige auxiliaire. En effet, il suffit de cesser d'alimenter l'électroaimant 338, de sorte que le mors n'est plus attiré contre la rondelle de frottement 326 et ne peut donc plus générer d'effort résistant.

La seconde différence réside dans le fait que l'entraîneur 322 ne forme plus un palier de guidage de la tige auxiliaire 320. La fonction de palier est maintenant assurée par une portée 336 réalisée sur une extrémité de la tige auxiliaire 320 pour être en appui contre les sommets des filets du taraudage interne de la tige auxiliaire 320. Ainsi, l'entraîneur 322 est ici utilisé uniquement pour sa fonction d'entraînement en rotation du mécanisme de génération d'effort résistant.

## Revendications

1. Actionneur télescopique comportant un corps (1) dans lequel une tige principale (2) est montée pour coulisser télescopiquement selon un axe de coulissement (X) entre une position rentrée et une position sortie, l'actionneur télescopique comportant une tige auxiliaire (20) montée pour se déplacer dans la tige principale (2) selon le dit axe de coulissement entre une position rentrée et une position sortie, **caractérisé en ce que** la tige auxiliaire (20) est montée pour coulisser télescopiquement dans la tige principale (2) et **en ce que** l'actionneur comporte des moyens commandés de retenue (30, 31, 32, 33) de la tige auxiliaire (20) dans la tige principale (2) en position rentrée.

2. Actionneur télescopique selon la revendication 1, dans lequel les moyens commandés de retenue (30, 31, 32, 33) sont portés par la tige principale (2) et par la tige auxiliaire (20).

3. Actionneur télescopique selon la revendication 1 ou 2, dans laquelle le corps (1) et la tige auxiliaire (20) comportent chacun une chape (13, 27), ces chapes (13, 27) étant destinées à être attelées à des éléments externes.

4. Actionneur selon la revendication 1, dans lequel les moyens commandés de retenue comportent :
- une griffe (30) portée par la tige principale (2) ;
- un redan (31) porté par la tige auxiliaire (20) pour coopérer avec la griffe ;
- un manchon de verrouillage (32) porté par la tige principale (2) et déplaçable axialement entre une position de libération dans laquelle le manchon laisse la griffe libre de se déformer radialement sous l'effet d'un passage d'un redan de la tige auxiliaire, et une position de verrouillage dans laquelle le manchon empêche la déformation radiale de la griffe, la griffe coopérant alors avec le redan pour définir la position rentrée de la tige auxiliaire.

5. Actionneur selon la revendication 1 dans lequel les moyens commandés de retenue comportent un organe élastique (38) adapté à maintenir la tige auxiliaire (20) en appui contre une butée axiale (30) escamotable desdits moyens commandés de retenue définissant la position rentrée de la tige auxiliaire, tout en permettant un certain recul de la tige auxiliaire dans la tige principale (2) en deçà de la position rentrée.

6. Actionneur selon la revendication 1, comportant des moyens de freinage (22, 23, 25) d'un coulissement de la tige auxiliaire dans la tige principale dans le sens d'une extension.

7. Actionneur selon la revendication 6, dans lequel les moyens de freinage comportent :
- un entraîneur (22,122) qui coopère avec la tige principale (2,202) selon une liaison hélicoïdale réversible ayant pour axe l'axe de coulissement (X) de sorte que l'entraîneur tourne lorsque la tige auxiliaire (20,120) coulisse dans la tige principale ;
- une virole (23,123) qui est montée à rotation sur la tige auxiliaire autour de l'axe de coulissement en étant entraînée en rotation par l'entraîneur au moins lorsque la tige auxiliaire sort de la tige principale;
- un organe de frottement (26,126) monté sur la tige auxiliaire et sur lequel la virole frotte lorsqu'elle est entraînée en rotation par l'entraîneur.

8. Actionneur selon la revendication 6, dans lequel les moyens de freinage comportent :
- un entraîneur (222) qui coopère avec la tige principale (202) selon une liaison hélicoïdale réversible ayant pour axe l'axe de coulissement (X) de sorte que l'entraîneur tourne lorsque la tige auxiliaire (220) coulisse dans la tige principale ;
- une virole (223) qui est montée à rotation sur la tige auxiliaire autour de l'axe de coulissement en étant entraînée en rotation par l'entraîneur au moins lorsque la tige auxiliaire sort de la tige principale, la virole portant des aimants permanents (237) ;
- un bobinage (238) monté fixe sur la tige auxiliaire avec lequel les aimants permanents portés par la virole sont en interaction électromagnétique lorsque la virole est entraînée en rotation par l'entraîneur.

9. Actionneur selon la revendication 6, dans lequel les moyens de freinage comportent :
- un entraîneur (322) qui coopère avec la tige principale (302) selon une liaison hélicoïdale réversible ayant pour axe l'axe de coulissement (x) de sorte que l'entraîneur tourne lorsque la tige auxiliaire (320) coulisse dans la tige principale ;
- une virole (323) qui est montée à rotation sur la tige auxiliaire autour de l'axe de coulissement en étant entraînée en rotation par l'entraîneur au moins lorsque la tige auxiliaire sort de la tige principale, la virole, un mors (328) étant monté mobile axialement sur la virole ;
- un électroaimant (338) monté fixe sur la tige auxiliaire pour attirer sélectivement le mors de sorte que celui-ci frotte contre un organe de frottement (326) monté fixe sur la tige auxiliaire lorsque la virole est entraînée en rotation par l'entraîneur.

10. Actionneur selon l'une des revendications 7 à 9, dans lequel les moyens de freinage comportent en outre un organe de multiplication (130, 230, 330) de vitesse de rotation disposé entre l'entraîneur et la virole de sorte que la virole tourne plus vite que l'entraîneur.

11. Actionneur selon l'une des revendications 7 à 9, dans lequel l'entraîneur (22) forme un palier de la tige auxiliaire (20) dans la tige principale (2).

12. Actionneur selon la revendication 1, comportant des moyens commandés de coulissement (5, 8, 9, 10) de la tige principale dans le corps.

13. Actionneur selon la revendication 12, dans lequel les moyens commandés de coulissement comportent :
- un organe moteur (5) ;
- une vis mère (9) s'étendant selon l'axe de coulissement et monté à rotation sur le corps (1) pour être entraîné en rotation par l'organe moteur ;
- un écrou (10) solidaire de la tige principale (2) coopérant avec la vis mère ;
- un moyen d'antirotation (3, 4) de la tige principale par rapport au corps.

14. Actionneur selon la revendication 13, dans lequel la vis mère (9) a une extrémité guidée par un premier palier rotulé (14) monté sur le corps, et une autre extrémité guidée par un deuxième palier rotulé (15) monté glissant dans la tige auxiliaire (20).

15. Actionneur selon la revendication 13, dans lequel la vis mère (9) est arrêtée axialement sur le corps (1) par une butée axiale double effet (11).

16. Actionneur selon la revendication 1, comportant un capteur (40) de déplacement de la tige auxiliaire (20) par rapport au corps (1).

17. Procédé d'utilisation d'un actionneur selon l'une des revendications précédentes, comportant l'étape de faire fonctionner l'actionneur :
- soit selon un mode normal dans lequel les moyens de retenue sont commandés pour retenir la tige auxiliaire en position rentrée dans la tige principale ;
- soit, au moins dans une circonstance dans laquelle la tige principale est bloquée dans le corps, selon un mode secours dans lequel les moyens de retenue sont commandés pour ne pas retenir la tige auxiliaire en position rentrée.

## Claims

1. A telescopic actuator comprising a cylinder (1) in which a main rod (2) is mounted to slide telescopically along a sliding axis (X) between a retracted position and an extended position, the telescopic actuator including an auxiliary rod (20) mounted to move in the main rod (2)along said sliding axis between a retracted position and an extended position, the actuator being **characterized in that** the auxiliary rod (20) is mounted to slide telescopically into the main rod (2) and the actuator including controlled retaining means (30, 31, 32, 33) for retaining the auxiliary rod (20)inside the main rod (2) in the retracted position.

2. A telescopic actuator according to claim 1, in which the controlled retaining means (30, 31, 32, 33) are carried by the main rod (2) and the auxiliary rod (20).

3. A telescopic actuator according to claim 1 or claim 2, in which the cylinder (1) and the auxiliary rod (20) each comprise a lug (13, 27), these lugs being designed to be coupled to external elements.

4. An actuator according to claim 1, in which the controlled retaining means comprise:
· a catch (30) carried by the main rod (2);
· a step (31) carried by the auxiliary rod (20) to co-operate with the catch; and
· a lockable sleeve (32) carried by the main rod (2) and displaceable axially between a release position in which the sleeve leaves the catch free to deform radially under the effect of a step of the auxiliary rod going past it, and a locking position in which the sleeve prevents the catch deforming radially, the catch then co-operating with the step to define the retracted position of the auxiliary rod.

5. An actuator according to claim 1, in which the controlled retaining means comprise a resilient member (38) adapted to hold the auxiliary rod (20) pressed against a retractable axial abutment (30) of said controlled retaining means defining the retracted position of the auxiliary rod, while allowing the auxiliary rod to retract a little into the main rod (2) beyond its retracted position.

6. An actuator according to claim 1, including sliding brake means (22, 23, 25) for braking the sliding of the auxiliary rod in the main rod in the extension direction.

7. An actuator according to claim 6, in which the brake means comprise:
· a driver (22, 122) co-operating with the main rod (2, 202) via a reversible helical connection having the sliding axis (X) as its axis so that the driver rotates when the auxiliary rod (20, 120) slides in the main rod;
· a bushing (23, 123) mounted to rotate on the auxiliary rod about the sliding axis on being driven in rotation by the driver, at least while the auxiliary rod is extending from the main rod; and
· a friction member (26, 126) mounted on the auxiliary rod and against which the bushing rubs while it is being driven in rotation by the driver.

8. An actuator according to claim 6, in which the brake means comprise:
· a driver (222) co-operating with the main rod (202) via a reversible helical connection having the sliding axis (X) as its axis so that the driver rotates when the auxiliary rod (220) slides in the main rod;
· a bushing (223) mounted to rotate on the auxiliary rod about the sliding axis on being driven in rotation by the driver, at least while the auxiliary rod is extending from the main rod, the bushing carrying permanent magnets (237); and
· a winding (238) mounted stationary on the auxiliary rod with which the permanent magnets carried by the bushing interact electromagnetically while the bushing is being driven in rotation by the driver.

9. An actuator according to claim 6, in which the brake means comprise:
· a driver (322) co-operating with the main rod (302) via a reversible helical connection having the sliding axis (X) as its axis so that the driver rotates when the auxiliary rod (320) slides in the main rod;
· a bushing (323) mounted to rotate on the auxiliary rod about the sliding axis on being driven in rotation by the driver, at least while the auxiliary rod is extending from the main rod, a jaw (328) being mounted to move axially on the bushing; and
· an electromagnet (338) mounted stationary on the auxiliary rod to attract the jaw selectively so that the jaw rubs against a friction member (326) mounted stationary on the auxiliary rod when the bushing is driven in rotation by the driver.

10. An actuator according to any one of claims 7 to 9, in which the brake means further comprise rotary speed-increasing gearing (130, 230, 330) disposed between the driver and the bushing so that the bushing rotates faster than the driver.

11. An actuator according to any one of claims 7 to 9, in which the driver (22) forms a bearing for the auxiliary rod (20) in the main rod (2).

12. An actuator according to claim 1, including controlled sliding means (5, 8, 9, 10) for controlling sliding of the main rod in the cylinder.

13. An actuator according to claim 12, in which the controlled sliding means comprise:
· a motor member (5);
· a lead screw (9) extending along the sliding axis and rotatably mounted on the cylinder (1) so as to be driven in rotating by the motor member;
· a nut (10) secured to the main rod (2) and co-operating with the lead screw; and
· antirotation means (3, 4) for preventing the main rod from rotating relative to the cylinder.

14. An actuator according to claim 13, in which the lead screw (9) has one end guided by a first ball joint (14) mounted on the cylinder, and another end guided by a second ball joint (15) slidably mounted in the auxiliary rod (20).

15. An actuator according to claim 13, in which the lead screw (9) is prevented from moving axially relative to the cylinder (1) by a double-acting axial abutment (11).

16. An actuator according to claim 1, including a sensor (40) for sensing displacement of the auxiliary rod (20) relative to the cylinder (1).

17. A method of using an actuator according to any preceding claim, the method comprising the step of causing the actuator to operate:
· either in a normal mode in which the retaining means are controlled to retain the auxiliary rod in the retracted position inside the main rod;
· or else, at least under circumstances in which the main rod is jammed in the cylinder, in an emergency mode in which the retaining means are controlled to cease retaining the auxiliary rod in the retracted position.

## Patentansprüche

1. Teleskopischer Stellantrieb, umfassend ein Gehäuse (1), in dem eine Hauptstange (2) entlang einer Verschiebungsachse (X) zwischen einer eingefahrenen Position und einer ausgefahrenen Position teleskopisch verschiebbar gelagert ist, wobei der teleskopische Stellantrieb eine Hilfsstange (20) umfasst, die in der Hauptstange (2) entlang der genannten Verschiebungsachse zwischen einer eingefahrenen Position und einer ausgefahrenen Position verschiebbar gelagert ist, **dadurch gekennzeichnet, dass** die Hilfsstange (20) in der Hauptstange (2) teleskopisch verschiebbar gelagert ist und dass der Stellantrieb gesteuerte Rückhaltemittel (30, 31, 32, 33) zum Halten der Hilfsstange (20) in der Hauptstange (2) in eingefahrener Position umfasst.

2. Teleskopischer Stellantrieb nach Anspruch 1, wobei die gesteuerten Rückhaltemittel (30, 31, 32, 33) von der Hauptstange (2) und von der Hilfsstange (20) getragen werden.

3. Teleskopischer Stellantrieb nach Anspruch 1 oder 2, wobei das Gehäuse
(1) und die Hilfsstange (20) jeweils einen Gabelkopf (13, 27) umfassen, wobei diese Gabelköpfe (13, 27) dazu bestimmt sind, an externen Elementen angekoppelt zu werden.

4. Stellantrieb nach Anspruch 1, wobei die gesteuerten Rückhaltemittel umfassen:
- eine Kralle (30), die von der Hauptstange (2) getragen wird,
- einen von der Hilfsstange (20) getragenen Vorsprung (31) zum Zusammenwirken mit der Kralle,
- eine Verriegelungshülse (32), die von der Hauptstange (2) getragen wird und axial zwischen einer Freigabeposition, in der die Hülse die Kralle frei gibt, um sich radial unter der Wirkung eines Durchtritts eines Vorsprungs der Hilfsstange zu verformen, und einer Verriegelungsposition verschiebbar ist, in der die Hülse die radiale Verformung der Kralle verhindert, wobei die Kralle dann mit dem Vorsprung zusammenwirkt, um die eingefahrene Position der Hilfsstange zu definieren.

5. Stellantrieb nach Anspruch 1, wobei die gesteuerten Rückhaltemittel ein elastisches Element (38) umfassen, das dazu geeignet ist, die Hilfsstange (20) in Anlage an einem ausfahrbaren axialen Anschlag (30) der genannten gesteuerten Rückhaltemittel zu halten, womit die eingefahrene Position der Hilfsstange definiert wird, während gleichzeitig ein gewisser Rücklauf der Hilfsstange in die Hauptstange (2) diesseits der eingefahrenen Position gestattet wird.

6. Stellantrieb nach Anspruch 1, umfassend Bremsmittel (22, 23, 25) zum Bremsen einer Verschiebung der Hilfsstange in der Hauptstange in Ausfahrrichtung.

7. Stellantrieb nach Anspruch 6, wobei die Bremsmittel umfassen:
- einen Mitnehmer (22, 122), der mit der Hauptstange (2, 202) entsprechend einer reversiblen schraubenförmigen Kopplung zusammenwirkt, die als Achse die Verschiebungsachse (X) hat, derart, dass sich der Mitnehmer dreht, wenn sich die Hilfsstange (20, 120) in der Hauptstange verschiebt,
- einen Ring (23, 123), der an der Hilfsstange um die Verschiebungsachse drehbar gelagert ist, indem er von dem Mitnehmer in Drehrichtung mitgenommen wird, zumindest wenn die Hilfsstange aus der Hauptstange austritt,
- ein Reibungselement (26, 126), das an der Hilfsstange angebracht ist und an dem Ring reibt, wenn dieser von dem Mitnehmer in Drehrichtung mitgenommen wird.

8. Stellantrieb nach Anspruch 6, wobei die Bremsmittel umfassen:
- einen Mitnehmer (222), der mit der Hauptstange (202) entsprechend einer reversiblen schraubenförmigen Kopplung zusammenwirkt, die als Achse die Verschiebungsachse (X) hat, derart, dass sich der Mitnehmer dreht, wenn sich die Hilfsstange (220) in der Hauptstange verschiebt,
- einen Ring (223), der an der Hilfsstange um die Verschiebungsachse drehbar gelagert ist, indem er von dem Mitnehmer in Drehrichtung mitgenommen wird, zumindest wenn die Hilfsstange aus der Hauptstange austritt, wobei der Ring Dauermagneten (237) trägt,
- eine Wicklung (238), die fest an der Hilfsstange angebracht ist und mit der die von dem Ring getragenen Dauermagneten in elektromagnetischer Wechselwirkung stehen, wenn der Ring von dem Mitnehmer in Drehrichtung mitgenommen wird.

9. Stellantrieb nach Anspruch 6, wobei die Bremsmittel umfassen:
- einen Mitnehmer (322), der mit der Hauptstange (302) entsprechend einer reversiblen schraubenförmigen Kopplung zusammenwirkt, die als Achse die Verschiebungsachse (X) hat, derart, dass sich der Mitnehmer dreht, wenn sich die Hilfsstange (320) in der Hauptstange verschiebt,
- einen Ring (323), der an der Hilfsstange um die Verschiebungsachse drehbar gelagert ist, indem er von dem Mitnehmer in Drehrichtung mitgenommen wird, zumindest wenn die Hilfsstange aus der Hauptstange austritt, wobei eine Spannbacke (328) axial beweglich an dem Ring gelagert ist,
- einen Elektromagnet (338), der fest an der Hilfsstange gelagert ist, um die Spannbacke selektiv anzuziehen, derart, dass diese an einem fest an der Hilfsstange angebrachten Reibungselement (326) reibt, wenn der Ring von dem Mitnehmer in Drehrichtung mitgenommen wird.

10. Stellantrieb nach einem der Ansprüche 7 bis 9, wobei die Bremsmittel ferner ein Drehgeschwindigkeitsübersetzungselement (130, 230, 330) umfassen, das zwischen dem Mitnehmer und dem Ring derart angeordnet ist, dass sich der Ring schneller als der Mitnehmer dreht.

11. Stellantrieb nach einem der Ansprüche 7 bis 9, wobei der Mitnehmer (22) ein Lager für die Hilfsstange (20) in der Hauptstange (2) bildet.

12. Stellantrieb nach Anspruch 1, umfassend gesteuerte Verschiebungsmittel (5, 8, 9, 10) zur Verschiebung der Hauptstange in dem Gehäuse.

13. Stellantrieb nach Anspruch 12, wobei die gesteuerten Verschiebungsmittel umfassen:
- ein Antriebselement (5),
- eine Leitspindel (9), die sich entlang der Verschiebungsachse erstreckt und drehbar an dem Gehäuse (1) gelagert ist, um von dem Antriebselement in Drehrichtung angetrieben zu werden,
- eine Mutter (10), die fest mit der Hauptstange (2) verbunden ist und mit der Leitspindel zusammenwirkt,
- Antirotationsmittel (3, 4) zum Verhindern einer Rotation der Hauptstange gegenüber dem Gehäuse.

14. Stellantrieb nach Anspruch 13, wobei die Leitspindel (9) ein Ende hat, das von einem ersten Pendellager (14) geführt wird, das an dem Gehäuse angebracht ist, sowie ein anderes Ende, das von einem zweiten Pendellager (15) geführt wird, das gleitend in der Hilfsstange (20) gelagert ist.

15. Stellantrieb nach Anspruch 13, wobei die Leitspindel (9) axial an dem Gehäuse (1) von einem axialen Anschlag (11) mit Doppelwirkung gestoppt wird.

16. Stellantrieb nach Anspruch 1, umfassend einen Sensor (40) zum Erfassen der Verschiebung der Hilfsstange (20) gegenüber dem Gehäuse (1).

17. Verfahren zur Benutzung eines Stellantriebs gemäß einem der vorhergehenden Ansprüche, umfassend den Schritt des Betätigens des Stellantriebs:
- entweder gemäß einem Normalmodus, in dem die Rückhaltemittel so gesteuert werden, dass sie die Hilfsstange in der eingefahrenen Position in der Hauptstange halten,
- oder, zumindest in einer Situation, in der die Hauptstange in dem Gehäuse blockiert ist, gemäß einem Hilfsmodus, in dem die Rückhaltemittel derart gesteuert werden, dass sie die Hilfsstange nicht in ihrer eingefahrenen Position halten.
